(19) Europäisches Patentamt
European Patent Office
Office européen des brevets

(11) **EP 3 716 044 B1**

(12) **FASCICULE DE BREVET EUROPEEN**

(45) Date de publication et mention de la délivrance du brevet:
**16.11.2022 Bulletin 2022/46**

(21) Numéro de dépôt: **20166467.9**

(22) Date de dépôt: **27.03.2020**

(51) Classification Internationale des Brevets (IPC):
***G06F 7/72*** *(2006.01)*

(52) Classification Coopérative des Brevets (CPC):
**G06F 7/723;** G06F 2207/7257

(54) **PROTECTION D'UN CALCUL ITÉRATIF**

SCHUTZ EINER ITERATIVEN BERECHNUNG

PROTECTION OF AN ITERATIVE CALCULATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.03.2019 FR 1903353**

(43) Date de publication de la demande:
**30.09.2020 Bulletin 2020/40**

(73) Titulaire: **STMicroelectronics (Rousset) SAS 13790 Rousset (FR)**

(72) Inventeurs:
• **DIOP, Ibrahima 13013 MARSEILLE (FR)**
• **LINGE, Yanis 13710 FUVEAU (FR)**

(74) Mandataire: **Cabinet Beaumont 4, Place Robert Schuman B.P. 1529 38025 Grenoble Cedex 1 (FR)**

(56) Documents cités:
**EP-A2- 1 134 653      WO-A1-2016/053792 US-A1- 2008 044 010      US-A1- 2009 067 617**

• **ITOH K ET AL: "DPA COUNTERMEASURES BY IMPROVING THE WINDOW METHOD", CRYPTOGRAPHIC HARDWARE AND EMBEDDED SYSTEMS. INTERNATIONALWORKSHOP, XX, XX, 13 août 2002 (2002-08-13), pages 303-317, XP001160529,**

**Description**

Domaine technique

La présente description concerne de façon générale les circuits électroniques et, plus particulièrement, les circuits exécutant des opérations itératives. La présente description concerne plus particulièrement la protection de calculs d'exponentiations modulaires ou de calculs sur courbes elliptiques contre des attaques visant à découvrir des quantités manipulées par ces calculs.

Technique antérieure

Dans de nombreuses applications, des circuits électroniques mettent en oeuvre des algorithmes de chiffrement, d'authentification, de calcul de signature, et, plus généralement, des algorithmes manipulant des données, dites secrètes, c'est-à-dire dont on souhaite réserver l'accès à certains utilisateurs ou circuits. Parmi ces algorithmes, certains utilisent des opérations itératives. Il peut s'agir d'exponentiations modulaires, par exemple des algorithmes de type RSA, ou de produits sur courbes elliptiques, par exemple des algorithmes de type ECDH.

De nombreuses méthodes, dites attaques, existent pour tenter de découvrir ou pirater des données secrètes manipulées par ces calculs. Parmi ces attaques, des attaques, dites par canaux cachés, exploitent des informations indirectes telles que la consommation du circuit (attaques SPA, DPA), son rayonnement électromagnétique, etc. L'interprétation de ces informations renseigne le pirate sur la ou les données secrètes.

Dans les attaques par canaux cachés, on distingue notamment les attaques dites verticales, et les attaques dites horizontales.

Les attaques horizontales, que visent particulièrement la présente description, consistent à comparer des segments issus d'une même trace (par exemple, de consommation ou de rayonnement) entre eux, afin d'extraire l'information secrète. Elles n'utilisent qu'une seule trace d'exécution.

Le document US 2009/0067617 décrit une exponentiation modulaire sécurisée par balayage aléatoire d'exposant.

Le document EP 1134653 décrit un dispositif de traitement d'information, un procédé de traitement d'information et une carte à microcircuit.

Le document WO 2016/053792 décrit un fractionnement d'exposant pour des opérations cryptographiques.

Le document ITOH K ET AL: "DPA COUNTERMEASURES BY IMPROVING THE WINDOW METHOD", CRYPTOGRAPHIC HARDWARE AND EMBEDDED SYSTEMS. INTERNATIONAL WORKSHOP, XX, XX, 13 août 2002 (2002-08-13), pages 303-317, XP001160529 décrit des contremesures contre des attaques DPA.

Résumé de l'invention

Il existe un besoin d'améliorer la protection des données, manipulées par des algorithmes dont chaque exécution met en oeuvre des étapes itératives, contre des attaques par canaux cachés, en particulier contre des attaques horizontales.

Un mode de réalisation pallie tout ou partie des inconvénients des procédés et circuits usuels de protection de données, manipulées par des algorithmes, contre des attaques horizontales.

Un mode de réalisation prévoit un procédé de protection d'un calcul sur un premier nombre et un deuxième nombre, comme défini dans la revendication 1.

Un mode de réalisation , défini dans la revendication 13, prévoit un circuit électronique configuré pour la mise en oeuvre du procédé décrit.

Brève description des dessins

Ces caractéristiques et avantages, ainsi que d'autres, seront exposés en détail dans la description suivante de modes de réalisation et modes de mise en oeuvre particuliers faite à titre non limitatif en relation avec les figures jointes parmi lesquelles :

la figure 1 représente, de façon schématique, un mode de réalisation d'un circuit électronique ;
la figure 2 représente, sous forme de blocs, des étapes d'un calcul usuel d'exponentiation modulaire ;
la figure 3 représente, sous forme de blocs, un mode de mise en oeuvre d'un procédé de protection d'un calcul d'exponentiation modulaire ;
la figure 4 représente, sous forme de blocs, des étapes d'un calcul usuel sur courbe elliptique ; et
la figure 5 représente, sous forme de blocs, un mode de mise en oeuvre d'un procédé de protection d'un calcul sur courbe elliptique.

## Description des modes de réalisation

De mêmes éléments ont été désignés par de mêmes références dans les différentes figures. En particulier, les éléments structurels et/ou fonctionnels communs aux différents modes de réalisation et modes de mise en oeuvre peuvent présenter les mêmes références et peuvent disposer de propriétés structurelles, dimensionnelles et matérielles identiques.

Par souci de clarté, seuls les étapes et éléments utiles à la compréhension des modes de réalisation et modes de mise en oeuvre décrits ont été représentés et sont détaillés. En particulier, les applications des calculs exécutés ou celles des circuits les exécutant n'ont pas été détaillées, les modes de réalisation et modes de mise en oeuvre décrits étant compatibles avec les applications usuelles.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

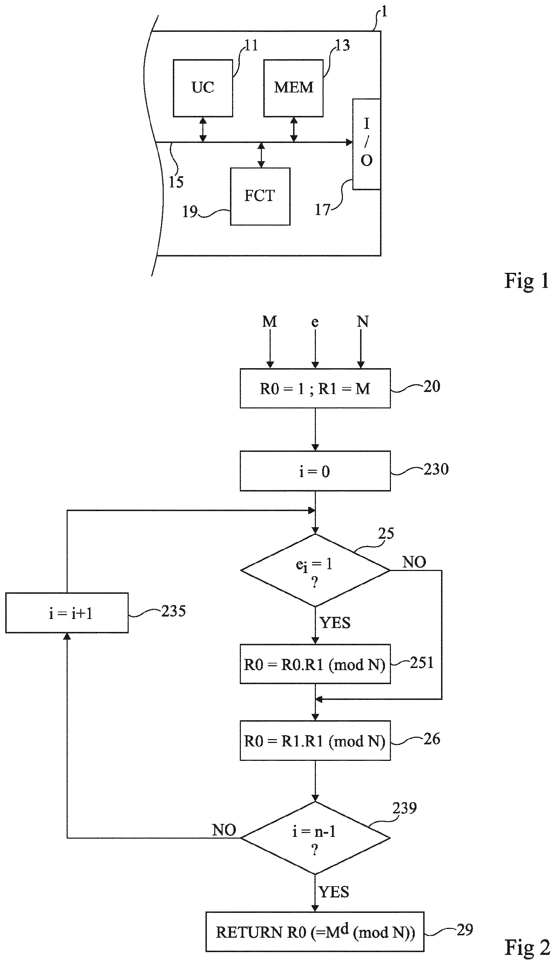

La figure 1 représente, de façon schématique, un mode de réalisation d'un circuit électronique.

Selon ce mode de réalisation, le circuit 1 comporte :

une entité de calcul 11 (UC), par exemple une machine d'états, un microprocesseur, un circuit logique programmable, etc. ;
une ou plusieurs zones 13 (MEM) de stockage volatil et/ou non volatil pour stocker tout ou partie de données et clés ;
un ou plusieurs bus 15 de données, d'adresses et/ou de commandes entre les différents éléments internes au circuit 1 ; et
une interface d'entrée-sortie 17 (I/O) de communication avec l'extérieur du circuit 1.

Le circuit 1 peut inclure divers autres circuits en fonction de l'application, symbolisés en figure 1 par un bloc 19 (FCT).

Des opérations de calcul itératif, par exemple d'exponentiation modulaire, se retrouvent dans de nombreux algorithmes de chiffrement parmi lesquels, par exemple le système connu sous la dénomination de RSA.

Une exponentiation modulaire consiste à calculer un résultat C d'une exponentiation d'un nombre ou message M par un exposant e (entier) modulo N, c'est-à-dire appliquer une formule du type :

[Math 1]

$$C = M^e \ (mod \ N)$$

Le plus souvent :

le nombre M représente un nombre (ou une information représentative du nombre) que l'on souhaite chiffrer, authentifier, signer, etc. ; et
l'exposant e et le modulo N (le couple (e, N)) représentent une clé (ou des informations représentatives de la clé) de chiffrement, d'authentification, de signature, etc.

Le calcul de l'exponentiation modulaire par un circuit électronique (une machine d'états, un processeur exécutant le procédé sous forme de programme, un circuit logique programmable, etc.), par exemple le circuit 1, s'effectue généralement en appliquant des méthodes basées sur l'utilisation de plusieurs variables ou registres et en effectuant des calculs itératifs sur des bits de l'exposant.

On fait référence à une exponentiation modulaire notée arbitrairement $C = M^e$ (mod N), la transposition aux variables utilisées selon l'opération réalisée en pratique étant à la portée de l'homme du métier.

Des opérations de calcul itératif se trouvent également dans des opérations telles que des multiplications scalaires sur courbes elliptiques qui constituent une autre catégorie d'algorithmes de chiffrement.

Une multiplication scalaire consiste à calculer un résultat C d'une multiplication d'un point P d'une courbe elliptique par un entier d (scalaire), c'est-à-dire appliquer une formule du type :

$$[\text{Math 2}]$$

$$C = d.P$$

Le plus souvent :

le point P représente le nombre (ou une information représentative du nombre) que l'on souhaite chiffrer, authentifier, signer, etc. ; et
le scalaire d représente la clé (ou des informations représentatives de la clé) de chiffrement, d'authentification, de signature, etc.

Comme pour une exponentiation modulaire, la multiplication scalaire sur courbe elliptique par un circuit électronique (une machine d'états, un processeur exécutant le procédé sous forme de programme, un circuit logique programmable, etc.), par exemple le circuit 1, s'effectue généralement en appliquant des méthodes basées sur l'utilisation de plusieurs variables ou registres et en effectuant des calculs itératifs sur les bits du scalaire.

On fait référence à une multiplication scalaire sur courbe elliptique notée arbitrairement C = d.P, la transposition aux variables utilisées selon l'opération réalisée en pratique étant à la portée de l'homme du métier.

Divers modes de réalisation sont décrits ci-dessous en prenant tour à tour pour exemple une application à une exponentiation modulaire et une application à un calcul sur courbe elliptique. Dans les exemples décrits ci-dessous, le calcul utilise au moins deux registres du circuit 1, ou deux emplacements mémoire, notés arbitrairement R0 et R1, sur lesquels vont être effectuées les opérations.

Pour simplifier, on confondra les registres et leurs contenus, c'est-à-dire qu'en faisant référence à des opérations effectuées sur les registres, on entend sur leurs contenus.

La figure 2 représente, sous forme de blocs, des étapes d'un calcul usuel d'exponentiation modulaire.

Dans une première étape (bloc 20, R0 = 1 ; R1 = M), le registre R0 est initialisé à 1 et le registre R1 est chargé avec le nombre M. L'exposant e est chargé dans un autre registre (non représenté), ou réside dans la mémoire. Dans l'exemple représenté en figure 2, on considère que l'exposant e comporte n bits $e_i$.

On entame alors un calcul en boucle sur les bits $e_i$ de l'exposant e. Par exemple, un compteur i est initialisé à 0, représentant le bit de poids faible (bloc 230, i = 0) et est incrémenté de 1 (bloc 235, i= i + 1) à chaque traitement d'un bit $e_i$ de l'exposant tant que tous les bits $e_i$ n'ont pas été traités (bloc 239, i = n-1 ?).

A chaque itération, c'est-à-dire pour chaque bit $e_i$ (successivement du bit le moins significatif ou de poids faible vers le bit le plus significatif ou de poids fort), on commence par tester la valeur du bit $e_i$ de l'exposant e (bloc 25, $e_i$ = 1 ?).

Si le bit courant $e_i$ vaut 1 (sortie YES du bloc 25), le contenu du registre R0 est multiplié, modulo N, par le contenu du registre R1 et le résultat est placé dans le registre R0 (bloc 251, R0 = R0.R1 (mod N)).

Puis, ou si le bit courant $e_i$ vaut 0 (sortie NO du bloc 25), le contenu du registre R1 est élevé au carré, modulo N, et le résultat est placé dans le registre R1 (bloc 26, R1 = R1.R1 (mod N)). En d'autres termes, le contenu du registre R1 est multiplié par lui-même et le résultat est placé dans le registre R1.

Tant que tous les bits $e_i$ de l'exposant e n'ont pas été traités (sortie NO du bloc 239), on incrémente le compteur i (bloc 235, i = i + 1) et on revient à l'étape 25 ($e_i$ = 1 ?). Une fois que tous les bits $e_i$ de l'exposant e ont été traités (sortie YES du bloc 239), le registre R0 contient le résultat de l'exponentiation modulaire (bloc 29, RETURN R0 (= $M^e$ (mod N))), c'est-à-dire la valeur C = $M^e$ (mod N).

Le calcul illustré en figure 2 peut s'écrire également de la façon suivante :

```
R0 = 1 (étape 20)
R1 = M (étape 20)
Pour i = 0 à n-1 (étapes 230, 235, 239) :
        Si ei = 1                           (étape 25)
                alors R0 = R0.R1 (mod N)    (étape 251)
        R1 = R1.R1 (mod N)                  (étape 26)
Fin de boucle (sortie YES du bloc 239)
Retourner R0 (étape 29).
```

**EP 3 716 044 B1**

Un circuit mettant en oeuvre le calcul illustré en figure 2 est réputé vulnérable à des attaques horizontales. En d'autres termes, une seule trace d'exécution de ce calcul par un circuit électronique, par exemple le circuit 1, peut être exploitée par un attaquant ou pirate afin de remonter à l'information secrète M manipulée par le circuit. Des méthodes mathématiques (par exemple, des méthodes utilisant l'indicatrice d'Euler) permettent en effet, partant de la trace d'exécution, d'extraire la valeur de l'exposant e utilisé pour déchiffrer, signer, etc. le message M.

Une fois la valeur de l'exposant e connue, l'attaquant peut déchiffrer tous les messages M chiffrés, avec une clé publique correspondante, ou signer n'importe quel message M et ainsi être authentifié comme étant un autre expéditeur. La trace d'exécution peut prendre la forme, par exemple, d'un enregistrement de variation de puissance consommée ou de rayonnement électromagnétique émis, par le circuit électronique, lors de l'exécution du calcul.

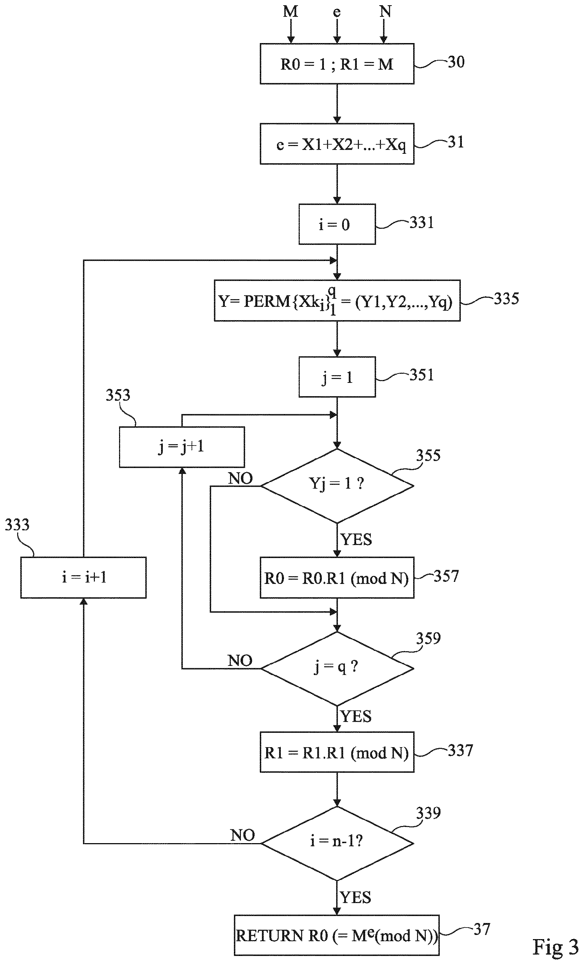

La figure 3 représente, sous forme de blocs, un mode de mise en oeuvre d'un procédé de protection d'un calcul d'exponentiation modulaire.

Dans une première étape (bloc 30, R0 = 1 ; R1 = M), le registre R0 est initialisé à 1 et le registre R1 est chargé avec le nombre M. L'exposant e est chargé dans un autre registre (non représenté), ou réside dans la mémoire. Dans l'exemple représenté en figure 3, l'exposant e comporte n bits ei (i désignant le rang du bit ei, avec $0 \leq i \leq n-1$).

Dans une deuxième étape (bloc 31, e = X1 + X2 + ... + Xq), l'exposant e est décomposé en une somme d'au moins deux nombres X1, X2 entiers, de préférence non nuls. Les nombres X1 à Xq correspondent donc à des termes d'une somme algébrique de q nombres entiers ($q \geq 2$) dont le résultat est égal à l'exposant e. L'exposant e peut donc s'écrire sous la forme :

[Math 3]

$$e = X1 + X2 + \cdots + Xq = \sum_{k=1}^{q} Xk$$

En pratique, le nombre q de termes X1 à Xq de la somme algébrique est, de préférence, supérieur ou égal à trois.

La décomposition de l'exposant e en termes X1 à Xq d'une somme algébrique, conformément à la relation [Math 3], se distingue en particulier :

du document US 2009/0067617, qui prévoit de fractionner ou tronquer un exposant pour obtenir seulement deux vecteurs comportant chacun une partie des bits de l'exposant ;

du document EP 1134653, qui prévoit d'effectuer des opérations sur des signaux séparés en blocs qui ne constituent pas des termes d'une somme ; et

du document WO 2016/053792, qui prévoit de générer deux parties d'exposant correspondant à des termes d'une somme bit à bit par un opérateur Ou-Exclusif (XOR).

Selon un mode de mise en oeuvre préféré, chaque terme Xk de la somme (c'est-à-dire chaque nombre X1 à Xq) possède un même nombre de bits, m.

En variante, au moins un terme Xk de la somme possède un nombre de bits strictement inférieur au nombre m de bits des autres Xk. Ledit terme Xk de la somme est alors, le cas échéant, complété, côté bits de poids fort, par des « 0 ». On se ramène ainsi au mode de mise en oeuvre préféré pour lequel tous les termes Xk de la somme possèdent le même nombre m de bits.

Dans l'exemple de la figure 3, on considère que chaque entier Xk ($1 \leq k \leq q$) parmi les q entiers X1 à Xq se compose de m bits Xki ($0 \leq i \leq m-1$). En d'autres termes, les bits Xki correspondent respectivement aux bits $X1_i$, $X2_i$, ... Xqi de même rang i des q entiers X1 à Xq dont la somme est égale à l'exposant e.

On entame alors un traitement en boucle sur les bits Xki de même rang. Par exemple, un compteur i est initialisé à 0, représentant le bit de poids faible (bloc 331, i = 0) de l'entier Xk. Le compteur i est incrémenté de 1 (bloc 333, i = i + 1) après chaque traitement de tous les bits Xki de même rang i des nombres X1 à Xq.

En fonction, par exemple, d'un niveau de protection à atteindre contre des attaques horizontales, tous les bits Xki d'un même rang i sont traités :

dans un même ordre d'un rang i à l'autre ;
dans un ordre aléatoire comme revendiqué dans la présente invention ; ou
dans un ordre issu d'une permutation (par exemple, une permutation circulaire, une permutation aléatoire, etc.) des bits Xki.

Selon le mode de mise en oeuvre illustré en figure 3, l'ordre dans lequel sont traités les bits Xki de même rang i des nombres X1 à Xq est déterminé selon une permutation aléatoire (bloc 335, Y = Math. 4 ci-dessous = (Y1, Y2,Yq)) des q bits Xki de même rang i.

[Math. 4]

$$PERM\{Xk_i\}_1^q$$

La permutation aléatoire Math. 4 permet, par exemple, de constituer ainsi une collection ordonnée Y, ou n-uplet, ou suite, ou famille d'éléments contenant q éléments Y1 à Yq. En d'autres termes, la collection Y contient, pour chaque rang i, des éléments Y1 à Yq qui correspondent aux bits X1$_i$, X2i, ... Xqi rangés dans un ordre aléatoire.

On entame alors, pour chaque itération du compteur i, un calcul en boucle sur les q bits Xki de même rang i, rangés aléatoirement pour former la collection Y. Par exemple, un compteur j est initialisé à 1, représentant le premier rang ou indice d'élément (bloc 351, j = 1) de la collection ordonnée Y. Le compteur j est incrémenté de 1 (bloc 353, j = j + 1) après chaque traitement d'un élément Yj de la collection Y.

A chaque itération, c'est-à-dire pour chaque élément Yj de rang j, on commence par tester la valeur de l'élément Yj (bloc 355, Yj = 1 ?). La valeur de chaque élément Yj correspond à la valeur de l'un des bits Xki de rang i des nombres X1 à Xq.

Si l'élément Yj vaut 1 (sortie YES du bloc 355), le contenu du registre R0 est multiplié, modulo N, par le contenu du registre R1 et le résultat est placé dans le registre R0 (bloc 357, R0 = R0.R1 (mod N)).

Si l'élément Yj vaut 0 (sortie NO du bloc 355), le contenu des registres R0, R1 demeure inchangé.

On passe alors au traitement du bit de l'élément Yj suivant (bloc 353, j = j + 1).

Tant que tous les q éléments Yj de la collection ordonnée Y n'ont pas été traités (sortie NO du bloc 359 j = q ?), on incrémente le compteur j (bloc 353, j = j + 1) et on revient à l'étape 355 (Yj = 1 ?). Cela revient ainsi à traiter tous les q bits Xki de même rang i, de préférence dans un ordre aléatoire. Une fois que tous les q éléments Yj de la collection Y ont été traités (sortie YES du bloc 359), le contenu du registre R1 est alors élevé au carré, modulo N, et le résultat est placé dans le registre R1 (bloc 337, R1 = R1.R1 (mod N)). En d'autres termes, le contenu du registre R1 est multiplié par lui-même et le résultat est placé dans le registre R1.

Tant que tous les bits Xki des nombres X1 à Xq n'ont pas été traités (sortie NO du bloc 339 i = n - 1 ?), on incrémente le compteur i (bloc 333, i = i + 1) et on revient à l'étape 335 (Y = Math. 4 = (Y1,Y2,...,Yq)). On balaye ainsi, par ordre croissant, tous les rangs i des bits Xki des nombres X1 à Xq. Une fois que tous les bits Xki des nombres X1 à Xq ont été traités (sortie YES du bloc 339), le registre R0 contient le résultat de l'exponentiation modulaire (bloc 37, RETURN R0 (= M$^e$ (mod N))), c'est-à-dire la valeur C = M$^e$ (mod N) .

Le calcul illustré en figure 3 peut s'écrire également de la façon suivante :

R0 = 1          (étape 30)
R1 = M          (étape 30)

Choisir q entiers X1 à Xq tels que :

e = X1 + X2 + ... + Xq                      (étape 31)
Pour i = 0 à n-1                            (étapes 331, 333, 339)
    Y = Math. 4                            (étape 335)
    Pour j = 1 à q                         (étapes 351, 353, 359)
        Si Yj = 1                          (étape 355)
            alors R0 = R0.R1 (mod N)       (étape 357)
    Fin de boucle                          (sortie YES du bloc 359)
    R1 = R1.R1 (mod N)                      (étape 337)
Fin de boucle                              (sortie YES du bloc 339)
Retourner R0                               (étape 37)

Ce mode de mise en oeuvre permet, par une décomposition en somme de l'exposant e et préférentiellement par un traitement dans un ordre aléatoire des bits Xki de même rang i des termes X1, X2, ... Xq de la somme, de résister à des attaques par canaux cachés. Un circuit mettant en oeuvre le calcul illustré en figure 3 résiste davantage à des attaques horizontales qu'un circuit mettant en oeuvre le calcul illustré en figure 2. En d'autres termes, une seule trace d'exécution de ce calcul par un circuit électronique, par exemple le circuit 1, ne peut être aisément exploitée par un attaquant ou pirate afin de remonter à l'information secrète M manipulée par le circuit.

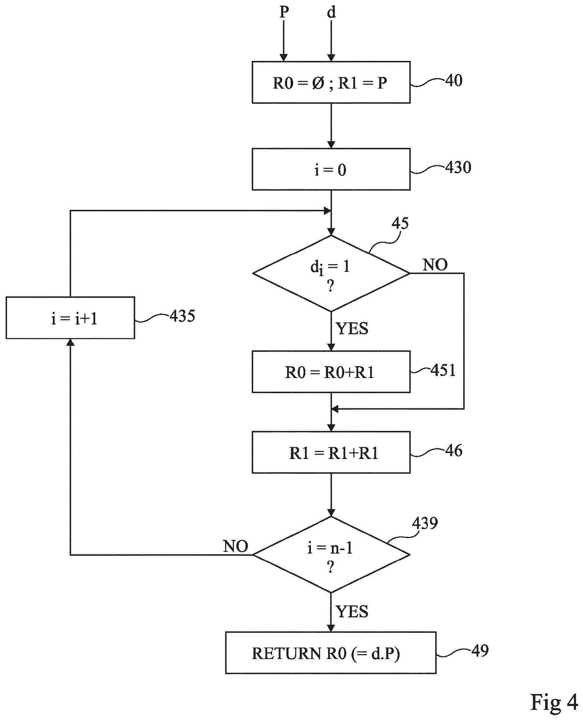

La figure 4 représente, sous forme de blocs, des étapes d'un calcul usuel sur courbe elliptique.

Dans une première étape (bloc 40, R0 = Ø ; R1 = P), le registre R0 est initialisé à Ø, qui représente l'élément neutre de la courbe elliptique. Le point P est chargé dans le registre R1. Le scalaire d est chargé dans un autre registre (non représenté), ou réside dans la mémoire. Dans l'exemple représenté en figure 4, on considère que le scalaire d comporte n bits di.

On entame alors un calcul en boucle sur les bits di du scalaire d. Par exemple, un compteur i est initialisé à 0, représentant le bit de poids faible (bloc 430, i = 0) et est incrémenté de 1 (bloc 435, i= i + 1) à chaque traitement d'un bit di du scalaire d tant que tous les bits di n'ont pas été traités (bloc 439, i = n-1 ?).

A chaque itération, c'est-à-dire pour chaque bit di (successivement du bit le moins significatif ou de poids faible vers le bit le plus significatif ou de poids fort), on commence par tester la valeur du bit di du scalaire d (bloc 45, di = 1 ?).

Si le bit courant di vaut 1 (sortie YES du bloc 45), le contenu du registre R0 est additionné au contenu du registre R1 et le résultat est placé dans le registre R0 (bloc 451, R0 = R0 + R1)).

Puis, ou si le bit courant di vaut 0 (sortie NO du bloc 45), le contenu du registre R1 est doublé et le résultat est placé dans le registre R1 (bloc 46, R1 = R1 + R1). En d'autres termes, le contenu du registre R1 est ajouté à lui-même et le résultat est placé dans le registre R1.

Tant que tous les bits di du scalaire d n'ont pas été traités (sortie NO du bloc 439), on incrémente le compteur i (bloc 435, i = i + 1) et on revient à l'étape 45 (di = 1 ?). Une fois que tous les bits di du scalaire d ont été traités (sortie YES du bloc 439), le registre R0 contient le résultat de la multiplication sur courbe elliptique (bloc 49, RETURN R0 (= d.P)), c'est-à-dire la valeur C = d.P.

Le calcul illustré en figure 4 peut s'écrire également de la façon suivante :

R0 = Ø (étape 40)
R1 = P (étape 40)
Pour i = 0 à n-1 (étapes 430, 435, 439) :

    Si di = 1                    (étape 45)

          alors R0 = R0 + R1   (étape 451)

      R1 = R1 + R1        (étape 46)
Fin de boucle                (sortie YES du bloc 439)
Retourner R0               (étape 49).

Un circuit mettant en oeuvre le calcul illustré en figure 4 est réputé vulnérable à des attaques horizontales. En d'autres termes, une seule trace d'exécution de ce calcul par un circuit électronique, par exemple le circuit 1, peut être exploitée par un attaquant ou pirate afin de remonter à l'information secrète P manipulée par le circuit. Des méthodes mathématiques permettent en effet, partant de la trace d'exécution, d'extraire la valeur du scalaire d utilisé pour déchiffrer, signer, etc. le message P.

Une fois la valeur du scalaire d connue, l'attaquant peut déchiffrer tous les messages P chiffrés, avec une clé publique correspondante, ou signer n'importe quel message P et ainsi être identifié comme un autre expéditeur. La trace d'exécution peut prendre la forme, par exemple, d'un enregistrement de variation de puissance consommée ou de rayonnement électromagnétique émis, par le circuit électronique, lors de l'exécution du calcul.

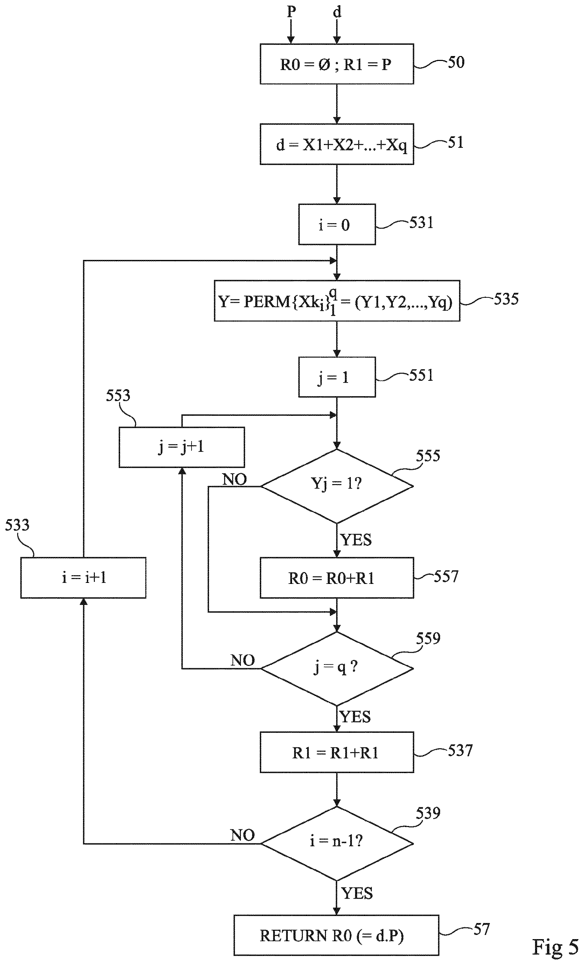

La figure 5 représente, sous forme de blocs, un mode de mise en oeuvre d'un procédé de protection d'un calcul sur courbe elliptique.

Dans une première étape (bloc 50, R0 = Ø ; R1 = P), le registre R0 est initialisé à Ø, qui représente l'élément neutre de la courbe elliptique. Le point P est chargé dans le registre R1. Le scalaire d est chargé dans un autre registre (non représenté), ou réside dans la mémoire. Dans l'exemple représenté en figure 5, le scalaire d comporte n bits di (i désignant le rang du bit di, avec $0 \leq i \leq n-1$).

Dans une deuxième étape (bloc 51, d = X1 + X2 + ... + Xq), le scalaire d est décomposé en une somme d'au moins deux nombres X1, X2 entiers, de préférence non nuls. Les nombres X1 à Xq correspondent donc à des termes d'une somme algébrique de q nombres entiers ($q \geq 2$) dont le résultat est égal au scalaire d. Le scalaire d peut donc s'écrire sous la forme :

[Math 5]

$$d = X1 + X2 + \cdots + Xq = \sum_{k=1}^{q} Xk$$

En pratique, le nombre q de termes X1 à Xq de la somme algébrique est, de préférence, supérieur ou égal à trois.

La décomposition du scalaire d en q termes X1 à Xq d'une somme algébrique, conformément à la relation [Math 5], n'équivaut pas à une décomposition dans laquelle le scalaire d correspondrait systématiquement à un résultat d'une somme bit à bit d'au moins deux termes. En particulier, on ne cherche pas à faire en sorte que le scalaire d soit égal à une combinaison par un opérateur Ou-Exclusif (XOR) des q termes X1 à Xq.

Selon un mode de mise en oeuvre préféré, chaque terme Xk de la somme (c'est-à-dire chaque nombre X1 à Xq) possède un même nombre de bits, m.

En variante, au moins un terme Xk de la somme possède un nombre de bits strictement inférieur au nombre m de bits des autres Xk. Ledit terme Xk de la somme est alors, le cas échéant, complété, côté bits de poids fort, par des « 0 ». On se ramène ainsi au mode de mise en oeuvre préféré pour lequel tous les termes Xk de la somme possèdent le même nombre m de bits.

Dans l'exemple de la figure 5, on considère que chaque entier Xk ($1 \le k \le q$) parmi les q entiers X1 à Xq se compose de m bits Xki ($0 \le i \le m{-}1$). En d'autres termes, les bits Xki correspondent respectivement aux bits $X1_i$, $X2_i$, ... Xqi de même rang i des q entiers X1 à Xq dont la somme est égale au scalaire d.

On entame alors un traitement en boucle sur les bits Xki de même rang. Par exemple, un compteur i est initialisé à 0, représentant le bit de poids faible (bloc 531, i = 0) de l'entier Xk. Le compteur i est incrémenté de 1 (bloc 533, i = i + 1) après chaque traitement de tous les bits Xki de même rang i des nombres X1 à Xq.

En fonction, par exemple, d'un niveau de protection à atteindre contre des attaques horizontales, tous les bits Xki d'un même rang i sont traités :

dans un même ordre d'un rang i à l'autre ;
dans un ordre aléatoire comme revendiqué dans la présente invention ; ou
dans un ordre issu d'une permutation (par exemple, une permutation circulaire, une permutation aléatoire, etc.) des bits Xki.

Selon le mode de mise en oeuvre illustré en figure 5, l'ordre dans lequel sont traités les bits Xki de même rang i des nombres X1 à Xq est déterminé selon une permutation aléatoire (bloc 535, Y = Math. 4 = (Y1,Y2,...,Yq)) des q bits Xki de même rang i. La permutation aléatoire Math. 4 permet, par exemple, de constituer ainsi une collection ordonnée Y, ou n-uplet, ou suite, ou famille d'éléments contenant q éléments Y1 à Yq. En d'autres termes, la collection Y contient, pour chaque rang i, des éléments Y1 à Yq qui correspondent aux bits $X1_i$, $X2_i$, ... Xqi rangés dans un ordre aléatoire.

On entame alors, pour chaque itération du compteur i, un calcul en boucle sur les q bits Xki de même rang i, rangés aléatoirement pour former la collection Y. Par exemple, un compteur j est initialisé à 1, représentant le premier rang ou indice d'élément (bloc 551, j = 1) de la collection ordonnée Y. Le compteur j est incrémenté de 1 (bloc 553, j = j + 1) après chaque traitement d'un élément Yj de la collection Y.

A chaque itération, c'est-à-dire pour chaque élément Yj de rang j, on commence par tester la valeur de l'élément Yj (bloc 555, Yj = 1 ?). La valeur de chaque élément Yj correspond à la valeur de l'un des bits Xki de rang i des nombres X1 à Xq.

Si l'élément Yj vaut 1 (sortie YES du bloc 555), le contenu du registre R0 est additionné au contenu du registre R1 et le résultat est placé dans le registre R0 (bloc 557, R0 = R0 + R1).

Si l'élément Yj vaut 0 (sortie NO du bloc 555), le contenu des registres R0, R1 demeure inchangé.

On passe alors au traitement du bit de l'élément Yj suivant (bloc 553, j = j + 1).

Tant que tous les q éléments Yj de la collection ordonnée Y n'ont pas été traités (sortie NO du bloc 559 j = q ?), on incrémente le compteur j (bloc 553, j = j + 1) et on revient à l'étape 555 (Yj = 1 ?). Cela revient ainsi à traiter tous les q bits Xki de même rang i, de préférence dans un ordre aléatoire. Une fois que tous les q éléments Yj de la collection Y ont été traités (sortie YES du bloc 559), le contenu du registre R1 est alors doublé et le résultat est placé dans le registre R1 (bloc 537, R1 = R1 + R1). En d'autres termes, le contenu du registre R1 est ajouté à lui-même et le résultat est placé dans le registre R1.

Tant que tous les bits Xki des nombres X1 à Xq n'ont pas été traités (sortie NO du bloc 539 i = n - 1 ?), on incrémente le compteur i (bloc 533, i = i + 1) et on revient à l'étape 535 (Y = Math. 4 = (Y1,Y2,...,Yq)). On balaye ainsi, par ordre croissant, tous les rangs i des bits Xki des nombres X1 à Xq. Une fois que tous les bits Xki des nombres X1 à Xq ont été traités (sortie YES du bloc 539), le registre R0 contient le résultat de la multiplication sur courbe elliptique (bloc 57, RETURN R0 (= d.P)), c'est-à-dire la valeur C = d.P.

Le calcul illustré en figure 5 peut s'écrire également de la façon suivante :

$$R0 = \emptyset \qquad \text{(étape 50)}$$
$$R1 = P \qquad \text{(étape 50)}$$

Choisir q entiers X1 à Xq tels que :

| | |
|---|---|
| $d = X1 + X2 + ... + Xq$    (étape 51) | |
| Pour i = 0 à n-1 | (étapes 531, 533, 539) |
|      Y = Math. 4 | (étape 535) |
|      Pour j = 1 à q | (étapes 551, 553, 559) |
|          Si Yj = 1 | (étape 555) |
|            alors R0 = R0 + R1 | (étape 557) |
|          Fin de boucle | (sortie YES du bloc 559) |
|          R1 = R1 + R1 | (étape 537) |
|      Fin de boucle | (sortie YES du bloc 539) |
|      Retourner R0 | (étape 57) |

Ce mode de mise en oeuvre permet, par une décomposition en somme du scalaire d et préférentiellement par un traitement dans un ordre aléatoire des bits Xki de même rang i des termes X1, X2, ... Xq de la somme, de résister à des attaques par canaux cachés. Un circuit mettant en oeuvre le calcul illustré en figure 5 résiste davantage à des attaques horizontales qu'un circuit mettant en oeuvre le calcul illustré en figure 4. En d'autres termes, une seule trace d'exécution de ce calcul par un circuit électronique, par exemple le circuit 1, ne peut être aisément exploitée par un attaquant ou pirate afin de remonter à l'information secrète P manipulée par le circuit.

Divers modes de réalisation, modes de mise en oeuvre et variantes ont été décrits. L'homme de l'art comprendra que certaines caractéristiques de ces divers modes de réalisation, modes de mise en oeuvre et variantes pourraient être combinées, et d'autres variantes apparaîtront à l'homme de l'art. En particulier, le choix de la taille de l'exposant e ou du scalaire d, ainsi que le choix du nombre q de termes Xk de la somme permettant de décomposer l'exposant e ou le scalaire d, dépendent de l'application et du temps de calcul acceptable.

Enfin, la mise en oeuvre pratique des modes de réalisation, modes de mise en oeuvre et variantes décrits est à la portée de l'homme du métier à partir des indications fonctionnelles données ci-dessus. En particulier, la formation de la collection ordonnée Y est facultative. On peut en effet imaginer un balayage, dans un ordre déterminé, par exemple selon une permutation aléatoire, des indices k permettant de pointer directement vers l'un des q bits Xki de même rang i des nombres X1 à Xq.

## Revendications

1. Procédé de protection d'un calcul itératif concernant un algorithme de sécurisation de données contre des attaques visant à découvrir des quantités manipulées par le calcul réalisé sur un premier nombre (M ; P), représentatif d'une information représentative d'un nombre que l'on souhaite chiffrer, et un deuxième nombre (e ; d), représentatif d'une information représentative d'une clé de chiffrement, le calcul étant exécuté par un circuit électronique (1), dans lequel :

   le deuxième nombre (e ; d) est décomposé en une somme algébrique d'au moins trois troisièmes nombres (X1, X2, X3) ; et
   le calcul est effectué bit par bit ($X1_i$, $X2_i$, $X3_i$) pour chaque rang (i) des troisièmes nombres (X1, X2, X3), tous les bits ($X1_i$, $X2_i$, $X3_i$) des troisièmes nombres (X1, X2, X3) étant traités par rangs (i) de bits successifs croissants et ledit traitement comprenant :

   balayer tous les bits ($X1_i$, $X2_i$, $X3_i$) d'un même rang (i) dans un ordre aléatoire ; et
   effectuer, en fonction de la valeur de chaque bit ($X1_i$, $X2_i$, $X3_i$), des opérations sur les contenus d'un premier registre (R0) et d'un deuxième registre (R1).

2. Procédé selon la revendication 1, dans lequel le calcul représente une exponentiation modulaire du premier nombre (M) par le deuxième nombre (e).

**3.** Procédé selon la revendication 1, dans lequel le calcul représente une multiplication d'un point (P) d'une courbe elliptique par un scalaire (d).

**4.** Procédé selon l'une quelconque des revendications 1 à 3, dans lequel les rangs (i) des bits $(X1_i, X2_i, X3_i)$ des troisièmes nombres (X1, X2, X3) sont balayés par ordre croissant.

**5.** Procédé selon l'une quelconque des revendications 1 à 4, dans lequel le traitement effectué sur les bits $(X1_i, X2_i, X3_i)$ de chaque rang (i) consiste :

si le bit $(X1_i, X2_i, X3_i)$ considéré est égal à 1, à effectuer une première opération avec un opérateur (. ; +) sur les contenus du premier registre (R0) et du deuxième registre (R1), puis à placer le résultat dans le premier registre (R0) ; et
si le bit $(X1_i, X2_i, X3_i)$ considéré est égal à 0, à conserver inchangés les contenus des deux registres (R0, R1).

**6.** Procédé selon la revendication 5, dans lequel le premier registre (R0) contient le résultat (C) du calcul.

**7.** Procédé selon la revendication 5 ou 6, dans lequel ledit opérateur est la multiplication (.).

**8.** Procédé selon la revendication 5 ou 6, dans lequel ledit opérateur est l'addition (+).

**9.** Procédé selon l'une quelconque des revendications 5 à 8, dans lequel le premier registre (R0) est initialisé avec l'élément neutre (1 ; Ø) dudit opérateur (. ; +).

**10.** Procédé selon l'une quelconque des revendications 5 à 9, dans lequel le deuxième registre (R1) est initialisé avec le premier nombre (M ; P).

**11.** Procédé selon l'une quelconque des revendications 5 à 10 dans lequel, après avoir traité tous les bits $(X1_i, X2_i, X3_i)$ d'un même rang (i) des troisièmes nombres (X1, X2, X3), une deuxième opération est effectuée avec ledit opérateur (. ; +) sur le contenu du deuxième registre (R1), le résultat de cette deuxième opération étant placé dans le deuxième registre (R1).

**12.** Procédé selon l'une quelconque des revendications 5 à 11, dans lequel les opérations sont effectuées module un quatrième nombre (N).

**13.** Circuit électronique (1) configuré pour la mise en oeuvre du procédé selon l'une quelconque des revendications 1 à 12.

**Patentansprüche**

**1.** Ein Verfahren zum Schützen einer iterativen Berechnung im Zusammenhang mit einem Algorithmus zur Sicherung von Daten gegen Angriffe, die Größen zu erfahren trachten, die durch die Berechnung gehandhabt werden, die auf einer ersten Zahl (M; P), die Informationen zu einer zu verschlüsselnden Zahl wiedergibt, und einer zweiten Zahl (e; d), die Informationen zu einem Verschlüsselungsschlüssel wiedergibt, durchgeführt wird, wobei die Berechnung durch eine elektronische Schaltung (1) ausgeführt wird, wobei:

die zweite Zahl (e; d) in eine algebraische Summe wenigstens drei dritter Zahlen (X1, X2, X3) zerlegt wird, und die Berechnung Bit für Bit $(X1_i, X2_i, X3_i)$ für jeden Rang (i) der dritten Zahlen (X1, X2, X3) durchgeführt wird, wobei alle Bits $(X1_i, X2_i, X3_i)$ der dritten Zahlen (X1, X2, X3) in aufeinanderfolgenden, größer werdenden Biträngen (i) verarbeitet werden, wobei die Verarbeitung umfasst:

Durchlaufen aller Bits $(X1_i, X2_i, X3_i)$ des gleichen Rangs (i) in einer zufälligen Reihenfolge, und Durchführen, in Abhängigkeit von dem Wert jedes Bits $(X1_i, X2_i, X3_i)$, von Operationen auf den Inhalten eines ersten Registers (R0) und eines zweiten Registers (R1).

**2.** Verfahren nach Anspruch 1, wobei die Berechnung eine modulare Potenzierung der ersten Zahl (M) durch die zweite Zahl (e) ist.

**3.** Verfahren nach Anspruch 1, wobei die Berechnung eine Multiplikation eines Punkts (P) einer elliptischen Kurve mit einem Skalar (d) ist.

**4.** Verfahren nach einem der Ansprüche 1 bis 3, wobei die Ränge (i) der Bits (X1$_i$, X2$_i$, X3$_i$) der dritten Zahlen (X1, X2, X3) in einer größer werdenden Reihenfolge durchlaufen werden.

**5.** Verfahren nach einem der Ansprüche 1 bis 4, wobei die auf den Bits (X1$_i$, X2$_i$, X3$_i$) jedes Rangs (i) durchgeführte Verarbeitung aus Folgendem besteht:

wenn das betreffende Bit (X1$_i$, X2$_i$, X3$_i$) gleich 1 ist, Durchführen einer ersten Operation mit einem Operator (.; +) auf den Inhalten des ersten Registers (R0) und des zweiten Registers (R1), und dann Platzieren des Ergebnisses in dem ersten Register (R0), und
wenn das betreffende Bit (X1$_i$, X2$_i$, X3$_i$) gleich 0 ist, Halten der Inhalte der zwei Register (R0, R1) unverändert.

**6.** Verfahren nach Anspruch 5, wobei das erste Register (R0) das Ergebnis (C) der Berechnung enthält.

**7.** Verfahren nach Anspruch 5 oder 6, wobei der Operator eine Multiplikation (.) ist.

**8.** Verfahren nach Anspruch 5 oder 6, wobei der Operator eine Addition (+) ist.

**9.** Verfahren nach einem der Ansprüche 5 bis 8, wobei das erste Register (R0) mit dem neutralen Element (1; Ø) des Operators (.; +) initialisiert wird.

**10.** Verfahren nach einem der Ansprüche 5 bis 9, wobei das zweite Register (R1) mit der ersten Zahl (M; P) initialisiert wird.

**11.** Verfahren nach einem der Ansprüche 5 bis 10, wobei, nachdem alle Bits (X1$_i$, X2$_i$, X3$_i$) des gleichen Rangs (i) der dritten Zahlen (X1, X2, X3) verarbeitet wurden, eine zweite Operation mit dem Operator (.; +) auf dem Inhalt des zweiten Registers (R1) durchgeführt wird, wobei das Ergebnis der zweiten Operation in dem zweiten Register (R1) platziert wird.

**12.** Verfahren nach einem der Ansprüche 5 bis 11, wobei die Operationen modulo einer vierten Zahl (N) durchgeführt werden.

**13.** Elektronische Schaltung (1), die konfiguriert ist für das Implementieren des Verfahrens gemäß den Ansprüchen 1 bis 12.

**Claims**

**1.** A method of protecting an iterative calculation concerning an algorithm for securing data against attacks aiming at discovering quantities manipulated by the calculation performed on a first number (M; P), representative of information representative of a number which is desired to be ciphered, and a second number (e; d), representative of information representative of a cipher key, the calculation being executed by an electronic circuit (1), wherein:

the second number (e; d) is broken down into an algebraic sum of at least three third numbers (X1, X2, X3); and
the calculation is performed bit by bit (X1$_i$, X2$_i$, X3$_i$) for each rank (i) of the third numbers (X1, X2, X3), all the bits (X1$_i$, X2$_i$, X3$_i$) of the third numbers (X1, X2, X3) being processed by successive increasing bit ranks (i) and said processing comprising:

scanning all the bits (X1$_i$, X2$_i$, X3$_i$) of a same rank (i) in a random order; and
performing, depending on the value of each bit (X1$_i$, X2$_i$, X3$_i$), operations on the contents of a first register (R0) and of a second register (R1).

**2.** The method of claim 1, wherein the calculation is a modular exponentiation of the first number (M) by the second number (e).

**3.** The method of claim 1, wherein the calculation is a multiplication of a point (P) of an elliptic curve by a scalar (d).

4. The method of any of claims 1 to 3, wherein the ranks (i) of the bits ($X1_i$, $X2_i$, $X3_i$) of the third numbers (X1, X2, X3) are scanned by increasing order.

5. The method of any of claims 1 to 4, wherein the processing performed on the bits ($X1_i$, $X2_i$, $X3_i$) of each rank (i) consists in:

   if the considered bit ($X1_i$, $X2_i$, $X3_i$) is equal to 1, performing a first operation with an operator (.; +) on the contents of the first register (R0) and of the second register (R1), and then placing the result in the first register (R0); and
   if the considered bit ($X1_i$, $X2_i$, $X3_i$) is equal to 0, keeping the contents of the two registers (R0, R1) unchanged.

6. The method of claim 5, wherein the first register (R0) contains the result (C) of the calculation.

7. The method of claim 5 or 6, wherein said operator is multiplication (.).

8. The method of claim 5 or 6, wherein said operator is addition (+).

9. The method of any of claims 5 to 8, wherein the first register (R0) is initialized with the neutral element (1; Ø) of said operator (.; +).

10. The method of any of claims 5 to 9, wherein the second register (R1) is initialized with the first number (M; P).

11. The method of any of claims 5 to 10, wherein, after having processed all the bits ($X1_i$, $X2_i$, $X3_i$) of same rank (i) of the third numbers (X1, X2, X3), a second operation is performed with said operator (.; +) on the content of the second register (R1), the result of the second operation being placed in the second register (R1).

12. The method of any of claims 5 to 11, wherein the operations are performed modulo a fourth number (N).

13. An electronic circuit (1) configured to implement the method of any of claims 1 to 12.

Fig 1

Fig 2

M      e      N

R0 = 1 ; R1 = M    ⟋30

e = X1+X2+...+Xq    ⟋31

i = 0    ⟋331

Y= PERM{Xk$_i$}$_1^q$ = (Y1,Y2,...,Yq)    ⟋335

j = 1    ⟋351

j = j+1    ⟋353

Yj = 1 ?    355
NO

YES

333

i = i+1

R0 = R0.R1 (mod N)    ⟋357

j = q ?    359
NO

YES

R1 = R1.R1 (mod N)    ⟋337

i = n-1?    339
NO

YES

RETURN R0 (= M$^e$(mod N))    ⟋37

Fig 3

P    d

$$R0 = \emptyset \; ; R1 = P$$ —40

$$i = 0$$ —430

45

$$d_i = 1\ ?$$    NO

YES

$$i = i+1$$ —435

$$R0 = R0+R1$$ —451

$$R1 = R1+R1$$ —46

NO    $$i = n-1\ ?$$ 439

YES

RETURN R0 (= d.P) —49

Fig 4

Fig 5

## RÉFÉRENCES CITÉES DANS LA DESCRIPTION

**Documents brevets cités dans la description**

- US 20090067617 A
- EP 1134653 A

- WO 2016053792 A

**Littérature non-brevet citée dans la description**

- **ITOH K et al.** DPA COUNTERMEASURES BY IMPROVING THE WINDOW METHOD. *RYPTOGRAPHIC HARDWARE AND EMBEDDED SYSTEMS. INTERNATIONALWORKSHOP,* 13 Août 2002, 303-317